# EUROPÄISCHE PATENTSCHRIFT

(11) **EP 1 272 442 B1**
(45) Veröffentlichungstag und Bekanntmachung des Hinweises auf die Patenterteilung: **02.11.2005**
(21) Anmeldenummer: 01925431.7
(22) Anmeldetag: 13.03.2001
(51) Int. Cl.: C04B 41/89, C03C 17/42

(54) **GLAS-, KERAMIK- UND METALL-SUBSTRATE MIT SELBSTREINIGENDER OBERFLÄCHE, VERFAHREN ZU DEREN HERSTELLUNG UND DEREN VERWENDUNG**
GLASS CERAMIC AND METAL SUBSTRATES WITH A SELF-CLEANING SURFACE, METHOD FOR THE PRODUCTION AND USE THEREOF
SUBSTRATS EN VERRE, EN CERAMIQUE ET EN METAL POURVUS D'UNE SURFACE AUTO-NETTOYANTE, LEUR PROCEDE DE PRODUCTION ET LEUR UTILISATION

(30) Priorität: 01.04.2000 DE 10016485
(43) Veröffentlichungstag der Anmeldung: 08.01.2003
(73) Patentinhaber: Ferro GmbH, 60327 Frankfurt (DE)
(72) Erfinder: BAUMANN, Martin, 60599 Franfurt am Main (DE); FRITSCHE, Klaus-Dieter, 04680 Colditz (DE); KORBELARZ, Dagmar, 63457 Hanau (DE); LUDWIG, Stephan, 63543 Neuberg (DE); POTH, Lutz, 64380 Rossdorf (DE)
(74) Vertreter: Reinhardt, Markus
(86) Internationale Anmeldenummer: PCT/EP2001/002790
(87) Internationale Veröffentlichungsnummer: WO 2001/074739

(56) Entgegenhaltungen:
- EP-A- 0 867 490
- EP-A- 0 887 179

## Beschreibung

Die Erfindung betrifft Glas-, Keramik- und Metall-Substrate mit mindestens einer strukturierten hydrophoben Oberfläche, welche einen guten Selbstreinigungseffekt vermittelt. Ein weiterer Gegenstand richtet sich auf ein Verfahren zur Herstellung genannter Substrate mit einer selbstreinigenden Oberfläche, wobei das Verfahren die Ausbildung einer strukturierten Oberfläche und eine sich anschließende Hydrophobierung umfasst. Ein weiterer Gegenstand betrifft die Verwendung der Glas-, Keramik- und Metall-Substrate mit einer erfindungsgemäßen Oberfläche mit Selbstreinigungseffekt.

Es ist bekannt, dass zur Erzielung eines guten Selbstreinigungseffekts die Oberfläche neben einer guten Hydrophobie auch eine mikrorauhe Oberflächenstruktur aufweisen muss. Beide Merkmale sind in der Natur, beispielsweise im Lotusblatt, realisiert; die aus einem hydrophoben Material gebildete Oberfläche weist pyramidenförmige Erhebungen auf, welche ein paar µm voneinander entfernt sind. Wassertropfen kommen im wesentlichen nur mit diesen Spitzen in Berührung, so dass die Kontaktfläche winzig klein ist, was eine sehr niedrige Adhäsion zur Folge hat. Diese Zusammenhänge sowie die prinzipielle Anwendbarkeit des "Lotuseffekts" auf technische Oberflächen lehren A.A. Abramzon, Khimia i Zhizu (1982), Nr. 11, 38-40.

Ohne Bezug auf den Lotuseffekt sind aus der US 3,354,022 wasserabstoßende Oberflächen bekannt, wobei die Oberfläche eine mikrorauhe Struktur mit Erhebungen und Vertiefungen aufweist und aus einem hydrophoben Material, insbesondere einem fluorhaltigen Polymer gebildet ist. Gemäß einer Ausführungsform kann auf keramische Ziegel oder auf Glas eine Oberfläche mit Selbstreinigungseffekt aufgebracht werden, indem das Substrat mit einer Suspension beschichtet wird, welche Glaskugeln mit einem Durchmesser im Bereich von 3 - 12 µm (⌀ 3-12 µm) und ein Fluorkohlenstoffwachs auf der Basis eines Fluoralkylethoxymethacrylat-Polymers enthält. Ein Nachteil derartiger Beschichtungen mit Selbstreinigungseffekt ist deren geringe Abriebsbeständigkeit. Wie die Erfinder der vorliegenden Anmeldung feststellten, sind Glaskugeln zwar strukturbildend, der Selbstreinigungseffekt ist aber nur mäßig!

Die EP 0 909 747 A1 lehrt ein Verfahren zur Erzeugung einer Selbstreinigungseigenschaft von Oberflächen, insbesondere Dachziegeln. Die Oberfläche weist hydrophobe Erhebungen mit einer Höhe von 5 bis 200 µm auf. Hergestellt wird eine derartige Oberfläche durch Aufbringen einer Dispersion von Pulverpartikeln aus einem inerten Material in einer Siloxan-Lösung und anschließendes Aushärten. Wie im zuvor gewürdigten Verfahren sind sich die strukturbildenden Partikel nicht abriebsstabil auf der Oberfläche des Substrats fixiert.

Die EP 0 772 514 B1 und EP 0 933 388 A2 lehren selbstreinigende Oberflächen von Gegenständen mit einer künstlichen Oberflächenstruktur aus Erhebungen und Vertiefungen, wobei der Abstand zwischen den Erhebungen im Bereich von 5 bis 200 µm (EP 0 772 514 B1) bzw. 50 nm bis 10 µm (EP 0 933 388 A2) beträgt und die Höhe der Erhebungen im Bereich von 5 bis 100 µm bzw. 50 nm bis 10 µm liegt und die Struktur aus hydrophoben Polymeren oder haltbar hydrophobierten Materialien besteht. Zur Ausbildung der Strukturen eignen sich Ätz- und Prägeverfahren, Beschichtungsverfahren zum Aufkleben eines strukturbildenden Pulvers sowie Formgebungsverfahren unter Einsatz entsprechend strukturierter Negativformen. Sofern das strukturbildende Material nicht selbst hydrophob ist, schließt sich an die Strukturbildung eine Hydrophobierung, insbesondere eine Silanisierung, an. Gemäß EP 0 933 388 sind hierfür Alkylfluorsilane besonders geeignet. Zwar lassen sich selbstreinigende Oberflächen gemäß EP 0 772 514 B1 auch auf Verglasungen oder Dächer aufbringen, das Verfahren ist aber sehr aufwendig und zudem ist die strukturbildende Oberfläche analog jener der zuvor gewürdigten Dokumente wenig abriebsbeständig, so dass der Selbstreinigungseffekt bei stärkerer mechanischer Beanspruchung rasch nachlässt.

Die EP 0 887 179 A1 beschreibt die Bereitstellung eines Antibeschlag-Gegenstands und ein Verfahren zu dessen Herstellung. Dieser Gegenstand weist ausgezeichnete Antibeschlag-Eigenschaften auf, wobei der Gegenstand mit einem Film überzogen ist mit feinen Metalloxidpartikeln mit einer Größe von 4 bis 300 nm und mit Metalloxiden als Matrix mit Erhebungen und Vertiefungen mit einer mittleren Profilhöhe von 1,5 bis 80 nm und mit einem mittleren Abstand der Pfeilspitzen von 4 bis 300 nm.

Die EP 0 867 490 A2 beschreibt wasser- und ölabweisende Beschichtungen für Glas-, Keramik- und Metallprodukte, wobei die Beschichtung hergestellt wird, indem zunächst eine Glasbeschichtung auf einem Substrat (erste Siliziumoxidschicht) gebildet wird und anschließend eine wasser- und ölabweisende Beschichtung, die Fluorkohlenstoffgruppen und Siloxangruppen aufweist, auf die erste Beschichtung aufgebracht wird.

Aufgabe der vorliegenden Erfindung ist es, Substrate aus Glas, einem keramischen Material oder Metall mit strukturierter und hydrophober Oberfläche mit gutem Selbstreinigungseffekt aufzuzeigen. Gemäß einer weiteren Aufgabe sollte die strukturierte Oberfläche eine höhere Abriebsbeständigkeit aufweisen als vorbekannte Oberflächen, in welchen strukturbildende Partikel mittels eines organischen Polymers an die Oberfläche fixiert wurden. Gemäß einer weiteren Aufgabe der Erfindung sollten die Substrate mit der erfindungsgemäßen selbstreinigenden Oberfläche mittels eines einfachen Verfahrens erhältlich sein. Das Verfahren der Strukturbildung sollte sich unter Verwendung von bei der Oberflächenbehandlung, wie Dekorierung, der genannten Substrate üblicher Verfahrensschritte und technischer Einrichtungen hierzu durchführen lassen.

Es wurde gefunden, dass sich die vorgenannten Aufgaben sowie weitere sich aus der nachfolgenden Beschreibung ergebende Aufgaben dadurch lösen lassen, dass ein Substrat aus Glas, einem keramischen Material oder Metall mit einer ein glasflusserzeugendes Material, wie eine Glasfritte, und strukturbildende Partikel enthaltenden Zusammensetzung beschichtet, das beschichtete Substrat bei einer auf das Substrat und das glasflussbildende Material abgestimmten Brenntemperatur gebrannt und anschließend hydrophobiert wird, wobei die Hydrophobierung vorzugsweise unter Verwendung eines Fluoralkylsilans bzw. Fluoralkylsiloxans erfolgt.

Gegenstand der Erfindung ist demgemäß ein Glas- Keramik- oder Metall-Substrat mit mindestens einer selbstreinigenden Oberfläche, umfassend eine auf dem Substrat angeordnete, zumindest teilweise hydrophobierte Schicht mit einer mikrorauhen Oberflächenstruktur, dadurch gekennzeichnet, dass die Schicht einen Glasfluss und strukturbildende Partikel mit einem mittleren Partikeldurchmesser im Bereich von 0,5 bis 15 µm enthält, Glasfluss und strukturbildende Partikel in einem Volumenverhältnis im Bereich von 0,1 bis 5 anwesend sind und die mikrorauhe Oberflächenstruktur ein Verhältnis von mittlerer Profilhöhe zu mittlerem Abstand benachbarter Profilspitzen im Bereich von 0,3 bis 10 aufweist. Die Unteransprüche richten sich auf bevorzugte Ausführungsformen.

Bei den Substraten handelt es sich um solche, welche unter den auf das Substrat abgestimmten Temperaturbedingungen einem keramischen Brand widerstehen. Es handelt es sich demgemäß um Glas beliebiger chemischer Zusammensetzung einschließlich Glaskeramik, beliebige keramische Materialien, wie Ziegel, Klinker, Baukeramik, Irdengut, Steingut, Steinzeug, Hart- und Weichporzellan, Oxid- und Sonderkeramik sowie um Metalle, wie insbesondere Stähle. Die Substrate können vor dem Aufbringen der selbstreinigenden Oberfläche auch engobiert, glasiert oder emailliert sein.

Der Begriff "selbstreinigende Oberfläche" wird im Sinne des Standes der Technik verstanden. Die Oberfläche ist durch Wasser, vorzugsweise aber auch durch andere Flüssigkeiten wenig benetzbar, so dass eine rasche Tropfenbildung ermöglicht wird und abgelagerte Schmutzpartikel in einfacher Weise mit den ablaufenden Tropfen abgespült werden. Substrate mit einer erfindungsgemäß hergestellten selbstreinigenden Oberfläche sind nach dem Ablaufen von Wasser von der Oberfläche im wesentlichen trocken.

Die selbstreinigende Oberfläche weist eine mikrorauhe Oberflächenstruktur auf, d.h. eine Struktur mit Erhebungen und Vertiefungen in geometrischer oder stochastischer, vorzugsweise stochastischer Anordnung. Die Erhebungen und Vertiefungen sind im wesentlichen über die gesamte selbstreinigende Oberfläche verteilt. Es kann sich hierbei um eine einfache Struktur aus Erhebungen und Vertiefungen handeln; alternativ hierzu kann die Mikrorauhigkeit auch aus einer Grobstruktur und einer Feinstruktur bestehen, wobei sich die Erhebungen und Vertiefungen der Feinstruktur auf einer Vertiefungen und Erhöhungen aufweisenden Grobstruktur (= Überstruktur) befinden. Es wurde festgestellt, dass eine Oberfläche mit einer Grob- und einer Feinstruktur einen besonders guten Selbstreinigungseffekt ermöglicht.

Die mittlere Profilhöhe der Rauhigkeit der Oberfläche liegt üblicherweise im Bereich von 0,2 bis 10 µm, jedoch werden Werte ausserhalb dieser Grenzen nicht ausgeschlossen. Bevorzugt wird eine Rauhigkeit mit einer Profilhöhe im Bereich von etwa 1 µm bis etwa 10 µm. Sofern die Oberfläche sowohl eine Grob- als auch eine Feinstruktur aufweist, liegt die mittlere Profilhöhe der Feinstruktur im allgemeinen im Bereich von 0,2 bis etwa 4 µm, insbesondere 0,5 bis 3 µm und die mittlere Profilhöhe der Grobstruktur im Bereich von 1 bis 10 µm, jedoch oberhalb der Höhe der Feinstruktur.

Ein für einen guten Selbstreinigungseffekt wichtiges Merkmal der Oberflächenstruktur ist das Verhältnis der mittleren Profilhöhe zum mittleren Abstand benachbarter Profilspitzen: Dieses Aspektverhältnis liegt zweckmäßigerweise im Bereich von 0,3 bis 10, vorzugsweise im Bereich von 1 bis 5 und besonders bevorzugt im Bereich von 1 bis 2. Die genannten Aspektverhältnisse gelten sowohl für die Grobstruktur als auch die Feinstruktur.

Die mikrorauhe Oberflächenstruktur wird gebildet aus in einem Glasfluss verankerten Partikeln und/oder mittels Glasfluss aneinandergebundenen Partikelaggregaten. Der Glasfluss ist somit das Bindemittel für die strukturbildenden Partikel und führt zu einer wesentlich höheren Abriebsbeständigkeit der Oberflächenstruktur als dies unter Verwendung der vorbekannten Harze möglich war. Die eine mikrorauhe Oberflächenstruktur bildende Schicht umfasst im wesentlichen einen Glasfluss und die strukturbildenden Partikel, wovon ein Teil derselben vollständig von Glasfluss umgeben sein kann, ein anderer Teil, nämlich der strukturbildende Teil, aber aus dem Glasfluss herausragt. Ausser dem Glasfluss und den strukturbildenden Partikeln kann die mikrorauhe Schicht zusätzlich andere Komponenten enthalten, beispielsweise Pigmente, um dem System ein dekoratives Aussehen zu verleihen, oder elektrische Leitfähigkeit vermittelnde Metallpulver. Die genannten Stoffklassen können ihrerseits auch selbst Bestandteil der strukturbildenden Partikel sein.

Die auf dem Substrat befindliche Schicht mit der mikrorauhen Oberflächenstruktur enthält Glasfluss und strukturbildende Partikel im Volumenverhältnis im Bereich von zweckmäßigerweise 0,1 bis 5, vorzugsweise im Bereich von 0,2 bis 2 und besonders bevorzugt im Bereich von 0,5 bis 1. Mit zunehmendem Anteil an Glasfluss nimmt bei gleichem Partikelspektrum der Rauhheitsgrad und damit die Wirksamkeit ab. Andererseits ist mit einer zu geringen Menge Glasfluss eine abriebsstabile Fixierung der strukturbildenden Partikel auf der Oberfläche des Substrats nicht mehr ausreichend gewährleistet. Das für den angestrebten Zweck besonders geeignete Volumenverhältnis Glasfluss zu strukturbildenden Partikeln hängt im gewissem Umfang auch vom Teilchenspektrum der strukturbildenden Partikel ab. Das optimale Verhältnis lässt sich durch einfach durchzuführende Versuche ermitteln.

Der mittlere Teilchendurchmesser der strukturbildenden Partikel liegt in einem Bereich von 0,5 bis 15 µm. Mit zunehmendem mittleren Teilchendurchmesser der strukturbildenden Partikel und zunehmender Schichtdicke der mikrorauhen Schicht wird diese opaker. Eine Schicht mit der zuvor genannten bevorzugten bimodalen Struktur (Feinstruktur auf einer Überstruktur) enthält ein Partikelspektrum der strukturbildenden Partikel mit einem ausreichenden Anteil an feinen Partikeln im Bereich von vorzugsweise 0,2 bis 3 µm und einem ausreichenden Anteil an groben Partikeln mit einem Teilchendurchmesser im Bereich von 3 bis 15 µm, insbesondere 5 bis 10 µm.

Zur Ausbildung der mikrorauhen Struktur, werden solche strukturbildenden Partikel verwendet, deren Schmelzpunkt oberhalb der Brenntemperatur und damit oberhalb des Erweichungspunktes des Glasflusses liegt. Es wurde festgestellt, dass besonders wirksame Oberflächenstrukturen erhalten werden, wenn die strukturbildenden Partikel idiomorph sind, also ausgeprägte Kanten und Flächen, aufweisen. Partikel mit einer eher kugelförmigen Morphologie oder gar Glaskugeln ermöglichen zwar die Ausbildung einer mikrorauhen Oberflächenstruktur, jedoch ist deren Selbstreinigungseffekt nur mäßig oder unbefriedigend ausgebildet.

Als strukturbildende Partikel können beliebige Produkte anwesend sein; ihr Schmelzpunkt liegt oberhalb der Brenntemperatur und die Struktur ist idiomorph. Beispiele für strukturbildende Partikel sind Oxide und Silikate, wie Zirkonsilikate, Zeolithe, SiO₂, TiO₂, ZrO₂, SnO₂ und Al₂O₃.

Der Glasfluss kann sehr unterschiedliche Zusammensetzungen aufweisen; der Fachwelt sind zahlreiche Glaszusammensetzungen bekannt, welche den Erweichungsbereich von etwa 500 bis über 1000 °C abdecken. Es versteht sich, dass die Glaszusammensetzungen des Glasflusses für eine mikrorauhe Oberflächenstruktur auf Glas eine Erweichungstemperatur unterhalb der Erweichungstemperatur des Glassubstrats aufweist. Mikrorauhe Oberflächenstrukturen auf beispielsweise keramischen Substraten weisen im allgemeinen einen wesentlich höheren Erweichungspunkt auf.

Die Dicke der mikrorauhen Schicht ist variabel und liegt im allgemeinen im Bereich von 5 bis 100 µm, vorzugsweise im Bereich von 10 bis 20 µm. Die angegebene Dicke umfasst die Schichthöhe einschließlich der mittleren Profilhöhe der Erhebungen.

Die Oberfläche der mikrorauhen Schicht ist zumindest teilweise hydrophobiert, insbesondere die Spitzen der Erhebungen. Vorzugsweise ist jedoch die gesamte Oberfläche hydrophobiert. Die Hydrophobierung besteht im wesentlichen aus einer sehr dünnen Beschichtung, beispielsweise einer Dicke von 1 bis 10 nm, welche fest an der darunterliegenden Oberfläche haftet. Diese Haftung wird bewirkt durch eine Filmbildung des Beschichtungsmittels nach dem Auftrag. Bevorzugte Hydrophobierungsmittel sind chemisch mit dem Substrat verbunden, beispielsweise über eine Si-O-Si-Brücke. Derartige Brücken resultieren aus der Reaktion einer Silanolgruppe eines silikatischen Substrats mit einem Alkoxysilan oder Alkoxysiloxan. Bevorzugte erfindungsgemäße Substrate mit einer selbstreinigenden Oberfläche weisen eine oft nur wenige atomlagendicke Beschichtung auf der Basis eines Alkyltrialkoxysilans und vorzugsweise eines längerkettigen Fluoralkyltrialkoxysilans bzw. Oligomeren dieser Silane auf.

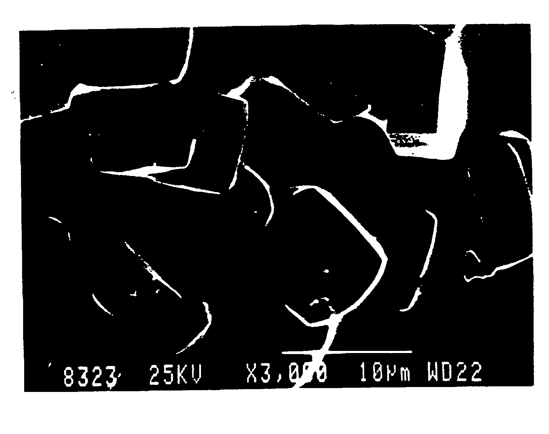

Die Figur zeigt eine REM-Aufnahme einer erfindungsgemäßen selbstreinigenden Oberfläche, wobei das Substrat Glas ist und es sich bei den strukturbildenden Partikeln um einen Zeolith vom Pentasil-Typ (ZSM 5) handelt, welche mittels eines Glasflusses an das Substrat gebunden sind. Das Volumenverhältnis Zeolith zu Glasfluss beträgt 1 zu 1; eine Zeolith und Glasfritte im genannten Volumenverhältnis enthaltende Druckpaste wurde mittels Siebdruck auf das Substrat aufgebracht und bei 650 °C eingebrannt. Die so hergestellte Oberfläche zeigte einen aussergewöhnlich guten Selbstreinigungseffekt und hohe Abriebsbeständigkeit.

Die erfindungsgemäßen Substrate mit selbstreinigender Oberfläche lassen sich durch ein Verfahren herstellen, umfassend Aufbringen einer hydrophoben mikrorauhen Schicht auf das Substrat, das dadurch gekennzeichnet ist, dass man das Substrat mit einer eine glasflussbildende Glasfritte und strukturbildende Partikel mit einem mittleren Partikeldurchmesser im Bereich von 0,5 bis 15 µm enthaltenden Zusammensetzung, welche Glasfritte und strukturbildende Partikel im Volumenverhältnis im Bereich von 0,1 bis 5 enthält, beschichtet, die Schicht bei einer Temperatur oberhalb der Erweichungstemperatur der Glasfritte einbrennt und die eingebrannte Schicht durch Aufbringen eines Hydrophobierungsmittels zumindest teilweise hydrophobiert.

Die stoffliche Auswahl, die Struktur und das Partikelspektrum der strukturbildenden Partikel, welche in der schichtbildenden Zusammensetzung zum Einsatz gelangen, sind den vorgenannten Ausführungen zu entnehmen. Gleiches gilt für das zu verwendende Volumenverhältnis von Glasfluss bildender Glasfritte zu strukturbildenden Partikeln; Glasfluss und Glasfritte haben das gleiche Volumen, so dass auch das genannte Verhältnis gleich ist. Bei der Glasfluss bildenden Glasfritte kann es sich um eine einzelne Glasfritte handeln oder auch ein Gemisch aus verschiedenen Glasfritten. Zusätzlich zu der einen oder mehreren Glasfritten und den strukturbildenden Partikeln kann die Zusammensetzung auch ein oder mehrere anorganische Pigmente und/oder Metallpulver, wie beispielsweise Silber für Leitfähigkeitzwecke, und/oder Verarbeitungshilfsstoffe zwecks Verbesserung der Herstellung der Zusammensetzung und/oder der Anwendung derselben auf dem zu beschichtenden Substrat enthalten.

Zur Herstellung eines metallischen Substrats mit einer selbstreinigenden Oberfläche ist es zweckmäßig, solche Glasfritten auszuwählen, wie sie zur Herstellung von Emails auf metallischen Substraten üblich sind. Es kann hierbei zweckmäßig sein, zum Zwecke einer besseren Haftung das metallische Substrat zunächst mit einem Grundemail zu versehen und erst hierauf die Zusammensetzung zur Ausbildung einer Schicht mit einer mikrorauhen Oberflächenstruktur aufzubringen.

Die zur Ausbildung der mikrorauhen Schicht zu verwendende Zusammensetzung kann in an sich bekannter Weise auf mindestens eine Oberfläche des zu beschichtenden Substrats aufgebracht werden. Geeignete Methoden sind hierzu direkte und indirekte Druckverfahren, darunter Siebdruck- und Tamponumdruckverfahren, ferner Tauch- und Sprühverfahren sowie elektrostatische Beschichtungsverfahren.

Zum Zwecke der Applikation der schichtbildenden Zusammensetzung mittels eines üblichen Druckverfahrens enthält die Zusammensetzung zusätzlich zu den zuvor genannten anorganischen Komponenten ein flüssiges Druckmedium, in welchem die anorganischen Komponenten angepastet sind. Einsetzbar sind hierbei wässrige und/oder organische oder organisch-wässrige Medien, welche ausser einer oder mehreren Lösungsmitteln zusätzlich ein oder mehrere organische Bindemittel und ggf. übliche Verarbeitungshilfsstoffe, beispielsweise Viskositätsregulatoren enthalten. Geeignet sind Medien, wie sie in der Fachwelt zur Herstellung von Druckpasten, zur Herstellung von keramischen Dekoren, welche in einem Dekorbrand eingebrannt werden, bekannt sind.

Gemäß einer alternativen Applikationsform wird die schichtbildende Zusammensetzung mittels eines bekannten elektrostatischen Beschichtungsverfahrens auf das zu beschichtende Substrat aufgebracht. Zum Zwecke des elektrostatischen Beschichtens ist es zweckmäßig, wenn die Zusammensetzung zusätzlich einige Prozent eines thermoplastischen Materials enthält, insbesondere 1 bis 8 Gew.-% eines Polyethylenwachses, und das Substrat vor dem elektrostatischen Beschichten oder unmittelbar danach auf eine Temperatur oberhalb des Erweichungspunkts des thermoplastischen Materials erwärmt - Einzelheiten zum elektrostatischen Beschichten von Glas und keramischen Materialien sind der WO 94/26679 und WO 98/58889 zu entnehmen.

An das Auftragen der schichtbildenden Zusammensetzung auf das Substrat schließt sich ein üblicher Brand an. Bei einer Temperatur oberhalb des Erweichungspunktes mindestens einer Glasfritte schmilzt diese zu einem Glasfluss zusammen. Überraschenderweise bilden die oberflächennahen strukturbildenden Partikel die erforderliche mikrorauhe Oberflächenstruktur mit dem anspruchsgemäßen Aspektverhältnis aus. Die an der Oberfläche befindlichen Partikel sind fest in dem Glasfluss verankert.

Gemäß einer weiteren Ausführungsform wird die mikrorauhe Schicht mittels einer Druckpaste, welche eine glassflussbildende Glasfritte enthält, bedruckt und die strukturbildenden Partikel auf die noch feuchte Druckfläche aufgebracht, beispielsweise durch Aufstäuben oder Berieseln mit ggf. anschließendem teilweisen Eindrücken der Partikel in die Druckfläche. Das so behandelte Substrat wird dann in bekannter Weise gebrannt und hydrophobiert.

Nach dem Brand wird die mikrorauhe Oberfläche mindestens teilweise, insbesondere an den Spitzen der Erhebungen, vorzugsweise aber insgesamt hydrophobiert. Als Hydrophobierungsmittel kommen die in der Fachwelt üblichen Produkte infrage. Hierbei handelt es sich entweder um hydrophobe Polymere, vorzugsweise jedoch um monomere oder oligomere Verbindungen, welche einen längerkettigen hydrophobierend wirkenden Alkyl- oder vorzugsweise Fluoralkylrest und zusätzlich eine funktionelle Gruppe enthalten, womit eine Vernetzung und damit Filmbildung der hydrophobierend wirkenden Verbindungen möglich ist und/oder womit auch eine Reaktion mit funktionellen Gruppen an der Oberfläche der mikrorauhen Schicht ermöglicht wird.

Die Hydrophobierung kann durch Aufbringen eines Lackes oder durch Polymerisation von Monomeren auf der mikrorauhen Oberfläche erfolgen. Als polymere Lacke eignen sich Lösungen oder Dispersionen von z.B. Polyvinylidenfluorid.

Alternativ zum Einsatz von fluorhaltigen Silanen und Siloxanen kann eine Hydrophobierung auch durch Plasmapolymerisation von ganz oder teilweise fluorierten Vinylverbindungen erfolgen.

Besonders zweckmäßig erfolgt die Hydrophobierung unter Verwendung reaktiver Alkyl- oder vorzugsweise Fluoralkylsilanen und oligomeren Alkyl- bzw. Fluoralkylsiloxanen. Vorzugsweise enthalten die Silane bzw. Siloxane als reaktive Gruppe eine oder mehrere Alkoxygruppen, wie Ethoxygruppen. Mittels dieser Alkoxygruppen ist eine Vernetzung des Hydrophobierungsmittels als auch eine chemische Bindung desselben an eine silikatische Oberfläche, welche Silanolgruppen enthält, möglich. Besonders bevorzugt zu verwendende Silanisierungsmittel sind Tridekafluoroctyltriethoxysilan und Oligomere hiervon (Dynasilane® der Firma Sivento Chemie Rheinfelden GmbH). Derartige Produkte können in Form verdünnter organischer insbesondere alkoholischer, wässrig-organischer und wässriger Lösungen auf die zu hydrophobierende Oberfläche aufgebracht werden, beispielsweise durch Tauchen, Sprühen oder Streichen.

Nach dem Auftragen einer ein fluorhaltiges Silan oder Siloxan enthaltenden Lösung auf das Substrat wird getrocknet und vorzugsweise bei einer Temperatur bis 500 °C ausgehärtet, beispielsweise 10-15 Min. bei 250 bis 300 °C oder 1 Min. bei etwa 500 °C oder 30-60 Min. bei etwa 150 °C. Das Optimum der thermischen Nachbehandlung bezüglich höchster Abriebsbeständigkeit liegt bei einer Temperatur im Bereich von 200 bis 300 °C.

Unter Einsatz verdünnter Lösungen der genannten Silane oder Siloxane werden wenige nm dicke, chemisch und mechanisch sehr beständige Schichten erhalten, bei welchen es sich um 2- und 3-dimensionale Siloxan-Netzwerke handelt.

Die unter Einsatz von reaktiven Fluoralkylsilanen oder -siloxanen zugänglichen hydrophoben Schichten zeichnen sich durch eine gleicherweise gute Hydrophobie und Oleophobie aus, so dass auch mit hydrophoben Schmutzpartikeln beschmutzte erfindungsgemäße Substrate leicht mit Wasser gereinigt werden können.

Die erfindungsgemäßen Substrate mit einer selbstreinigenden Oberfläche können überall dort verwendet werden, wo die Oberfläche einerseits einer ständigen Verschmutzungsgefahr ausgesetzt ist, andererseits in einfachster Weise mit Wasser gereinigt werden können soll. Erfindungsgemäße Glassubstrate mit selbstreinigender Oberfläche eignen sich zum Einsatz für die Verglasung von Kraftfahrzeugen, Zügen und Glasbausteinen. Erfindungsgemäße keramische Substrate mit einer selbstreinigenden Oberfläche eignen sich zum Einsatz als Baumaterial, wie Dachziegel, Klinker und Fliesen.

Die Vorteile der Erfindung bestehen darin, dass selbstreinigende Oberflächen auf Glas, keramischen und metallischen Substraten in einfacher Weise zugänglich sind und einen guten Selbstreinigungseffekt aufweisen. Die strukturbildende Schicht weist eine hohe Abriebsbeständigkeit auf. Die bevorzugten Oberflächen weisen eine "Superhydrophobie" auf, womit ein nahezu reibungsloses Abrollen von Wassertropfen bewirkt wird. Ausser für Oberflächen, wo es auf einen Selbstreinigungseffekt ankommt, eignen sich Substrate mit einer erfindungsgemäßen hydrophobierten strukturierten Oberfläche auch für chemisch-technische Apparate, wie beschichtete Rohre und Wärmetauscherplatten.

Die Erfindung wird anhand der nachfolgenden Beispiele weiter erläutert.

### Beispiele

Nachfolgend allgemeine Angaben zur Herstellung der Substrate mit einer selbstreinigenden Oberfläche. Details, wie eingesetzte Produkte, Mengenverhältnisse und Brennbedingungen zum Erhalt der strukturierten Oberfläche und Hydrophobierungsbedingungen sind den Tabellen zu entnehmen.

Direktdruck: Glasfritte und strukturbildende Partikel wurden mit einem wasserverdünnbaren (Nr. 80858 der dmc² AG) bzw. rein organischen (Nr. 80820 der dmc² AG) Druckmedium in bekannter Weise angepastet, die Druckpaste mittels Siebdruck auf das Substrat aufgebracht.

Indirektdruck: Glasfritte und strukturbildende Partikel wurden in einem Siebdrucköl (Nr. 80820 der dmc² AG) angepastet. Gedruckt wurde mittels Siebdruck auf Abziehbildpapier; nach dem Trocknen wurde überfilmt. Das Druckbild wurde in bekannter Weise auf das zu dekorierende Substrat aufgebracht.

Elektrostatischer Auftrag: Glasfritte und strukturbildende Partikel wurden im Gemisch mit Siloxan H68 (Fa. Weinstock & Siebert) behandelt (erst mischen, dann tempern), um den spezifischen Widerstand des Pulvers auf >10¹⁴ Ωm zu erhöhen. Das Pulvergemisch aus derart silikonisierter Glasfritte und strukturbildenden Partikeln wurde unter Verwendung einer Elektrostatikpistole bei 90 kV appliziert.

Die durch Direkt- oder Indirektdruck oder elektrostatisch auf das Substrat aufgebrachten Beschichtungen wurden in bekannter Weise eingebrannt; Aufheizzeit 200 K/h, Tₘₐₓ und Haltezeit sind der Tabelle zu entnehmen.

Substrat war in allen Beispielen 4 mm Floatglas.

Bei den Glasfritten handelte es sich um eine niedrigschmelzende Glasfritte mit hohem Pb-Gehalt und einem d₅₀-Wert von 3,3 µm und d₉₀-Wert von 10 µm (Nr. 10022 der dmc² AG), eine weitere Glasfritte (Nr. 10157 der dmc² AG) und eine Glasfritte zum elektrostatischen Glasieren (VNR 9316 F) mit einem d₅₀-Wert von 3,7 µm und d₉₀-Wert von 6,8 µm.

Als strukturbildende Partikel wurden Zirkonfarbkörper eingesetzt, nämlich Zirkon-Eisenrose (FK 27357 der dmc² AG), sowie ein hydrophober Zeolith vom Pentasil-Typ (Wessalith® DAZ).

Die Hydrophobierung der strukturierten eingebrannten Oberfläche erfolgte unter Verwendung einer Fluoralkylsilan-Formulierung, nämlich Dynasilan® F8262 (Degussa-Hüls AG) (ethanolische Lösung von Tridecafluoroctyltriethoxysilan). Die Lösung wurde über die Oberfläche gegeben, dann wurde bei erhöhter Temperatur ausgehärtet.

Der Selbstreinigungseffekt wurde durch einen Wassertropfenabrolltest auf leicht geneigter Fläche bewertet: +++ sehr gut, ++ gut, + mäßig, o schlecht.

Die nachfolgenden Tabellen 1a und 1b zeigen die Detailbedingungen und Ergebnisse.

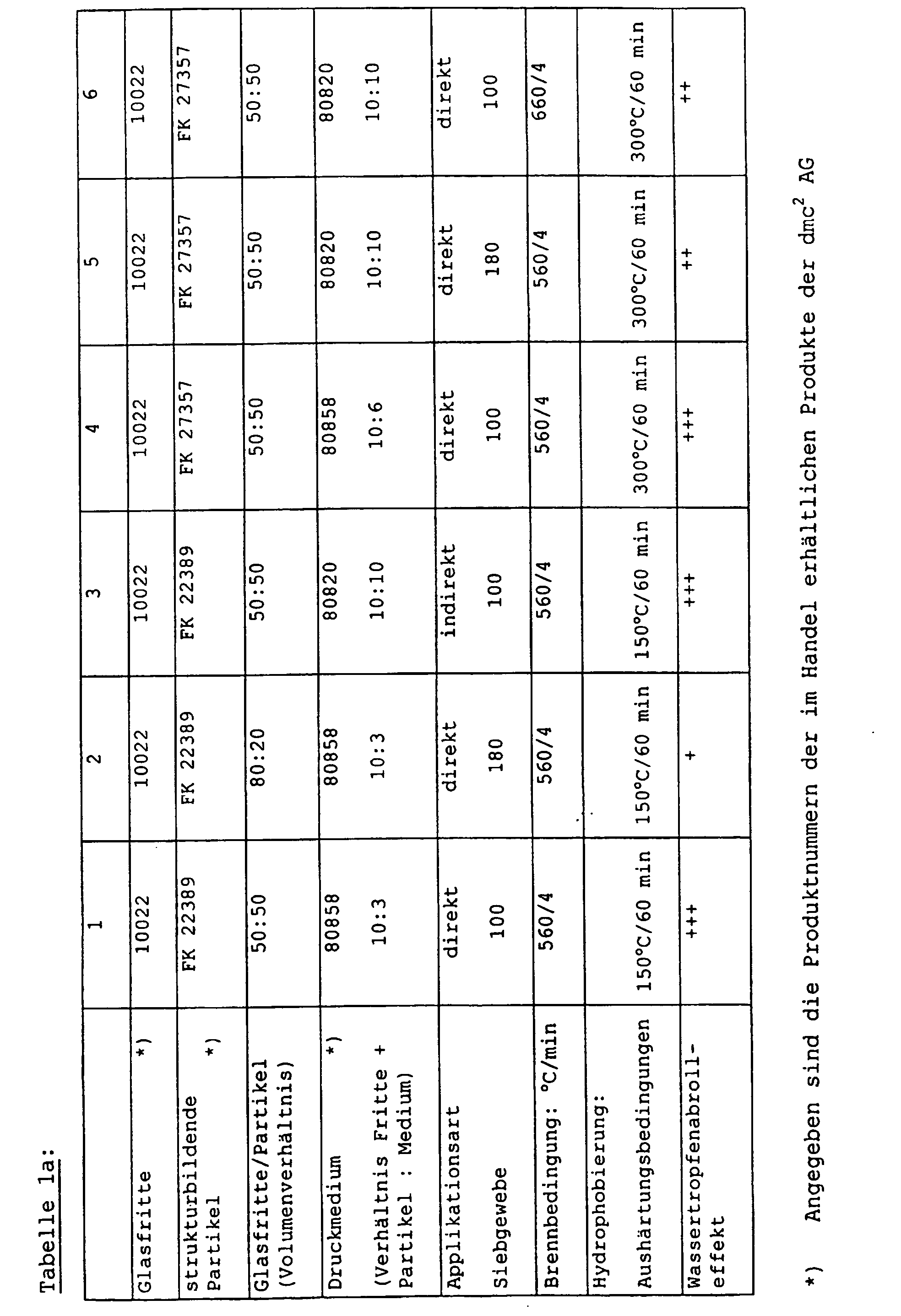

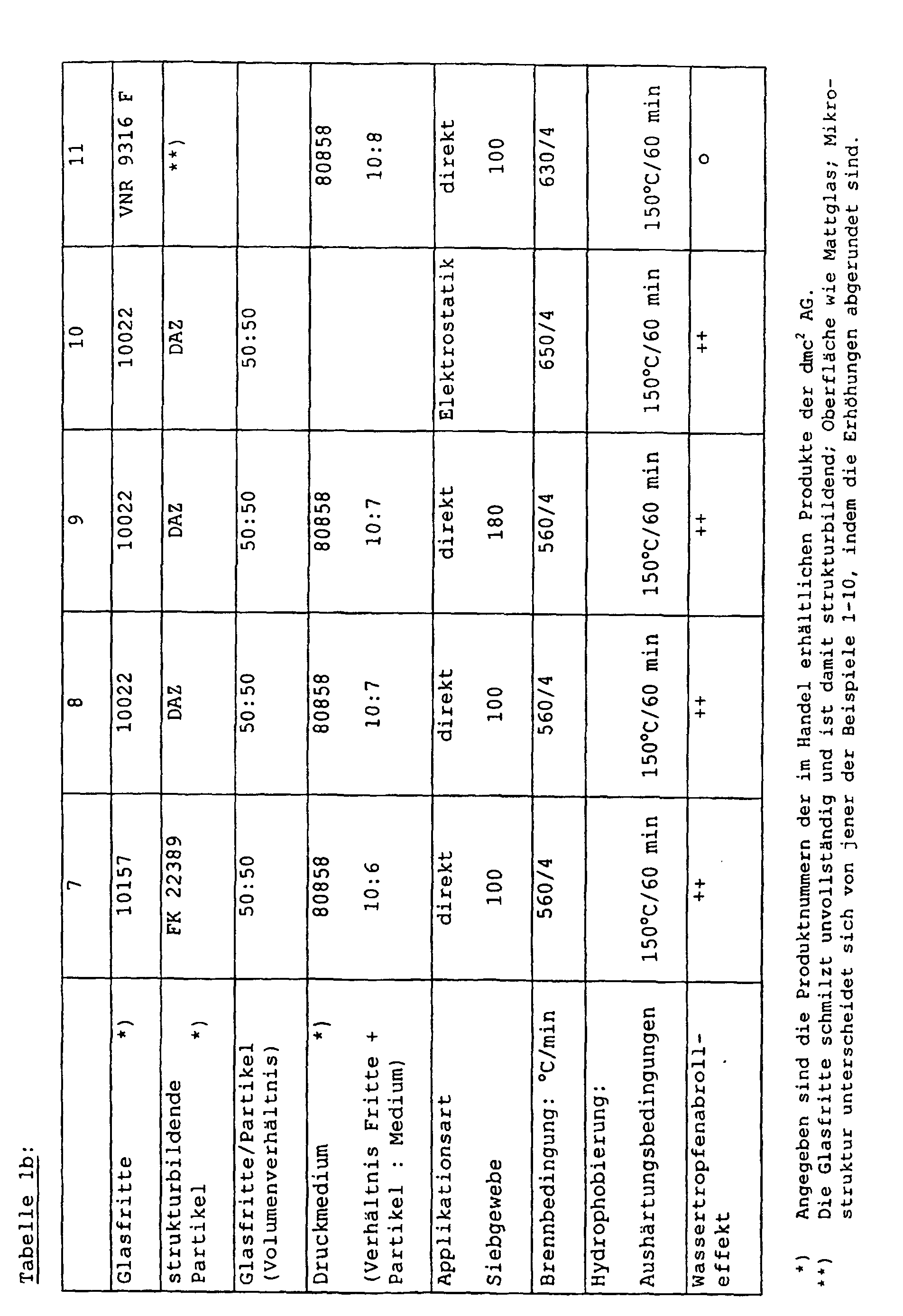

## Patentansprüche

1. Glas-, Keramik- oder Metall-Substrat mit mindestens einer selbstreinigenden Oberfläche, umfassend eine auf dem Substrat angeordnete, zumindest teilweise hydrophobierte Schicht mit einer mikrorauhen Oberflächenstruktur,
**dadurch gekennzeichnet, dass**
die Schicht einen Glasfluss und strukturbildende Partikel mit einem mittleren Partikeldurchmesser im Bereich von 0,5 bis 15 µm enthält, **wobei die strukturbildenden Partikel idiomorph sind, also ausgeprägte Kanten und Flächen aufweisen,** Glasfluss und strukturbildende Partikel in einem Volumenverhältnis im Bereich von 0,1 bis 5 anwesend sind und die mikrorauhe Oberflächenstruktur ein Verhältnis von mittlerer Profilhöhe zu mittlerem Abstand benachbarter Profilspitzen im Bereich von 0,3 bis 10 aufweist.

2. Substrat mit selbstreinigender Oberfläche nach Anspruch 1,
**dadurch gekennzeichnet,**
**dass** das Substrat ausgewählt ist aus der Reihe von Glas, Porzellan, Steinzeug, Steingut, Klinker und Ziegel.

3. Substrat mit selbstreinigender Oberfläche nach Anspruch 1 oder 2,
**dadurch gekennzeichnet,**
**dass** das Volumenverhältnis Glasfluss zu strukturbildenden Partikeln im Bereich von 0,2 bis 2, insbesondere 0,5 bis 1 liegt.

4. Substrat mit selbstreinigender Oberfläche nach einem der Ansprüche 1 bis 3,
**dadurch gekennzeichnet,**
**dass** die mikrorauhe Oberflächenstruktur ein Aspektverhältnis im Bereich von 1 bis 5 aufweist.

5. Substrat mit selbstreinigender Oberfläche nach einem der Ansprüche 1 bis 4,
**dadurch gekennzeichnet,**
**dass** die hydrophobierende Schicht auf einem Fluoralkylalkoxysilan oder Fluoralkyl-alkoxysiloxan basiert.

6. Verfahren zur Herstellung eines Substrats mit selbstreinigender Oberfläche gemäß einem der Ansprüche 1 bis 5, umfassend Aufbringen einer hydrophoben mikrorauhen Schicht auf das Substrat,
**dadurch gekennzeichnet, dass**
man das Substrat mit einer eine glasflussbildende Glasfritte und strukturbildende Partikel mit einem mittleren Partikeldurchmesser im Bereich von 0,5 bis 15 µm enthaltenden Zusammensetzung, welche Glasfritte und strukturbildende Partikel im Volumenverhältnis im Bereich von 0,1 bis 5 enthält, beschichtet, die Schicht bei einer Temperatur oberhalb der Erweichungstemperatur der Glasfritte einbrennt und die eingebrannte Schicht durch Aufbringen eines Hydrophobierungsmittels zumindest teilweise hydrophobiert.

7. Verfahren nach Anspruch 6,
**dadurch gekennzeichnet,**
**dass** man eine die glasflussbildende Glasfritte und strukturbildende Partikel enthaltende Zusammensetzung in Form einer druckfähigen Paste mittels eines Direkt- oder Indirektdruckverfahrens auf das Substrat aufträgt.

8. Verfahren nach Anspruch 6,
**dadurch gekennzeichnet,**
**dass** man eine glasflussbildende Glasfritte und strukturbildende Partikel enthaltende Zusammensetzung in Form eines Pulvergemischs elektrostatisch auf das Substrat aufträgt.

9. Verwendung eines Substrats mit selbstreinigender Oberfläche gemäß einem der Ansprüche 1 bis 5 für konstruktive und/oder dekorative selbstreinigende Elemente im Bausektor, für Verglasungen und im Apparatebau.

## Claims

1. A glass, ceramic or metal substrate with at least one self-cleaning surface, comprising a layer which has been made at least partly hydrophobic with a microrough surface structure and which is arranged on the substrate,
**characterised in that**
the layer contains a glass flux and structure-forming particles with a mean particle diameter within the range from 0.5 µm to 15 µm, the structure-forming particles being idiomorphic, i.e. exhibiting markedly pronounced edges and faces, the glass flux and the structure-forming particles being present in a volumetric ratio within the range from 0.1 to 5, and the microrough surface structure exhibiting a ratio of mean profile height to mean spacing of adjacent profile tips within the range from 0.3 to 10.

2. Substrate with a self-cleaning surface according to Claim 1,
**characterised in that**
the substrate is selected from the series comprising glass, porcelain, stoneware, earthenware, clinker and brick.

3. Substrate with a self-cleaning surface according to Claim 1 or 2,
**characterised in that**
the volumetric ratio of glass flux to structure-forming particles lies within the range from 0.2 to 2, in particular 0.5 to 1.

4. Substrate with a self-cleaning surface according to one of Claims 1 to 3,
**characterised in that**
the microrough surface structure exhibits an aspect ratio within the range from 1 to 5.

5. Substrate with a self-cleaning surface according to one of Claims 1 to 4,
**characterised in that**
the hydrophobising layer is based on a fluoroalkyl alkoxysilane or fluoroalkyl alkoxysiloxane.

6. A process for producing a substrate with a self-cleaning surface according to one of Claims 1 to 5, comprising applying a hydrophobic microrough layer onto the substrate,
**characterised in that**
the substrate is coated with a composition containing a glass-flux-forming glass frit and structure-forming particles with a mean particle diameter within the range from 0.5 µm to 15 µm, which contains the glass frit and the structure-forming particles in a volumetric ratio within the range from 0.1 to 5, the layer is stoved at a temperature above the softening-temperature of the glass frit, and the stoved layer is made at least partially hydrophobic by applying a hydrophobising agent.

7. Process according to Claim 6,
**characterised in that**
a composition containing the glass-flux-forming glass frit and structure-forming particles is applied onto the substrate in the form of a printable paste by means of a direct or indirect printing process.

8. Process according to Claim 6,
**characterised in that**
a composition containing glass-flux-forming glass frit and structure-forming particles is applied onto the substrate electrostatically in the form of a powder mixture.

9. Use of a substrate with a self-cleaning surface according to one of Claims 1 to 5 for constructional and/or decorative self-cleaning elements in the construction industry, for glazing and in apparatus construction.

## Revendications

1. Substrat de verre, de céramique ou de métal ayant au moins une surface autonettoyante, comprenant une couche disposée sur le substrat, rendue hydrophobe au moins en partie, ayant une structure de surface microrugueuse,
**caractérisé par le fait que**
la couche contient un flux de verre et des particules structurantes ayant un diamètre moyen de particule se situant dans la plage de 0,5 à 15 µm, les particules structurantes étant idiomorphes, par conséquent présentant des arêtes et des surfaces marquées, le flux de verre et les particules structurantes sont présents dans un rapport en volume se situant dans la plage de 0,1 à 5, et la structure de surface microrugueuse présente un rapport de la hauteur moyenne de profil à la distance moyenne des pointes de profils voisines se situant dans la plage de 0,3 à 10.

2. Substrat ayant une surface autonettoyante selon la revendication 1,
**caractérisé par le fait**
**que** le substrat est choisi dans la série du verre, de la porcelaine, du grès cérame vitrifié, du grès cérame non vitrifié, de la brique réfractaire et de la brique.

3. Substrat ayant une surface autonettoyante selon l'une des revendications 1 ou 2,
**caractérisé par le fait**
**que** le rapport en volume du flux de verre aux particules structurantes se situe dans la plage de 0,2 à 2, en particulier de 0,5 à 1.

4. Substrat ayant une surface autonettoyante selon l'une des revendications 1 à 3,
**caractérisé par le fait**
**que** la structure de surface microrugueuse présente un rapport d'allongement se situant dans la plage de 1 à 5.

5. Substrat ayant une surface autonettoyante selon l'une des revendications 1 à 4,
**caractérisé par le fait**
**que** la couche donnant le caractère hydrophobe est à base d'un fluoroalkyl-alcoxysilane ou d'un fluoralkyl-alcoxysiloxane.

6. Procédé de fabrication d'un substrat ayant une surface autonettoyante tel que défini à l'une des revendications 1 à 5, comprenant l'application d'une couche micro-rugueuse hydrophobe sur le substrat,
**caractérisé par le fait que**
l'on revêt le substrat par une composition contenant une fritte de verre formant un flux de verre et des particules structurantes ayant un diamètre moyen de particule se situant dans la plage de 0,5 à 15 µm, laquelle composition contient la fritte de verre et les particules structurantes dans un rapport en volume se situant dans la plage de 0,1 à 5, l'on cuit la couche à une température au-dessus de la température de ramollissement de la fritte de verre, et l'on rend hydrophobe au moins en partie la couche cuite par application d'un agent d'hydrophobisation.

7. Procédé selon la revendication 6,
**caractérisé par le fait**
**que** l'on applique sur le substrat par impression directe ou indirecte une composition contenant la fritte de verre formant le flux de verre et les particules structurantes sous la forme d'une pâte d'impression.

8. Procédé selon la revendication 6,
**caractérisé par le fait**
**que** l'on applique sur le substrat par voie électrostatique une composition contenant une fritte de verre formant un flux de verre et des particules structurantes sous la forme d'un mélange pulvérulent.

9. Utilisation d'un substrat ayant une surface autonettoyante tel que défini à l'une des revendications 1 à 5, pour des éléments autonettoyants de construction et/ou de décoration dans le secteur du bâtiment, pour des vitrages et dans la construction d'appareils.
